# EUROPÄISCHE PATENTSCHRIFT

(11) **EP 1 460 237 B1**
(45) Veröffentlichungstag und Bekanntmachung des Hinweises auf die Patenterteilung: **12.05.2010**
(21) Anmeldenummer: 03405190.4
(22) Anmeldetag: 19.03.2003
(51) Int. Cl.: F01D 25/24, F01D 9/02

(54) **Abgasturbinengehäuse**
Casing of a turbocharger
Carter pour une turbosoufflante

(43) Veröffentlichungstag der Anmeldung: 22.09.2004
(73) Patentinhaber: ABB Turbo Systems AG, 5400 Baden (CH)
(72) Erfinder: Kopp, Adrian, 5416 Kirchdorf (CH); Bättig, Josef, 5704 Egliswil (CH); Meier, Marcel, 5417 Untersiggenthal (CH)
(74) Vertreter: ABB Patent Attorneys

(56) Entgegenhaltungen:
- DE-B- 1 018 071
- DE-B- 1 152 703
- US-A- 4 786 232
- US-A- 5 503 490
- US-B1- 6 287 091

## Beschreibung

### Technisches Gebiet

Die Erfindung bezieht sich auf das Gebiet der abgasbetriebenen Turbolader.

Sie betrifft ein Turbinengehäuse gemäss dem Oberbegriff des Patentanspruchs 1, eine Abgasturbine mit einem solchen Turbinengehäuse sowie einen Turbolader mit einer solchen Abgasturbine.

### Stand der Technik

Abgasturbolader werden zur Leistungssteigerung von Verbrennungsmotoren eingesetzt. Sie umfassen eine durch die Abgase des Verbrennungsmotors angetriebene Abgasturbine und einen Verdichter zum Verdichten der dem Verbrennungsmotor zugeführten Frischluft. Dabei sind Turbinenrad und Verdichterrad in der Regel auf einer gemeinsamen Welle angeordnet. Im unteren Leistungsbereich bis zu einigen Megawatt werden vorwiegend Turbolader mit radial angeströmtem Turbinenrad und Innenlagerung der Welle eingesetzt.

Bei ungekühlten Abgasturboladern, bei denen die gasführenden Kanäle nicht gekühlt werden, liegt die Abgastemperatur am Turbineneintritt höher, wodurch der thermische Wirkungsgrad der Maschine und die an den Luftverdichter per Abgasmenge abgegebene Leistung steigt.

Das ungekühlte äussere Turbinengehäuse, das Gaseintrittsgehäuse, welches im Betrieb eine Temperatur von beispielsweise 650°C aufweist, ist meistens direkt auf dem mit beispielsweise 150°C wesentlich kühleren Lagergehäuse befestigt. In gewissen Anwendungsbereichen wird das Lagergehäuse, im Gegensatz zu den gasführenden Kanälen, auf die genannte Temperatur gekühlt.

Zur Befestigung des Turbinengehäuses auf dem Lagergehäuse werden bei herkömmlichen Abgasturbinen Laschen oder sogenannte Profilschellen- bzw. V-Band-Verbindungen Verbindungen eingesetzt. Um einen möglichst hohen Wirkungsgrad zu erzielen, ist der Luftspalt zwischen den Turbinenschaufeln dem Turbinengehäuse so klein wie möglich zu halten. Dies bedingt jedoch, dass diese Gehäusewand und das Turbinenrad jederzeit, insbesondere im Betrieb unter Volllast und bei entsprechender thermischer Belastung aller Teile, gegeneinander zentriert sind. Da sich infolge des hohen Temperaturunterschiedes zwischen dem Lagergehäuse und dem Turbinengehäuse der Zentriersitz des Turbinengehäuses zum Lagergehäuse mitunter radial aufweitet, kann sich das Turbinengehäuse gegenüber dem Lagergehäuse und insbesondere der darin gelagerten Turbinenwelle desaxieren, d.h. das Turbinengehäuse ist gegenüber der Welle und dem darauf angeordneten Turbinenrad in radialer Richtung nicht mehr zentriert. Eine solche Desaxierung, die durch äussere Krafteinwirkungen zusätzlich unterstützt werden kann, führt zu Berührungen der Turbinenschaufelspitzen mit der Gehäusewand des Turbinengehäuses, zu entsprechenden Abnutzungen oder Defekten und damit verbunden zu erheblichen Einbussen im Wirkungsgrad der Abgasturbine.

EP 0 118 051 zeigt, wie mittels sternförmig angeordneten, in radialer Richtung beweglichen Nut/Kamm-Verbindungen eine Desaxierung des heisseren Bauteils vermieden werden kann.

Dieser herkömmliche, relativ kostenintensive Lösungsansatz, bei dem der Fertigungsprozess nebst reinen Drehoperationen auch Fräsoperationen beinhaltet, ermöglicht aufgrund der diskreten Anzahl Nut/Kamm-Verbindungen nur eine beschränkte Anzahl unterschiedlicher Gehäusepositionen. Mit 3, 6, oder 12 gleichmässig verteilten Nocken bzw. Nuten können Positionsänderungen des äusseren Turbinengehäuses gegenüber dem Lagergehäuse von 120°, 60° oder 30° erreicht werden. Wünschenswert ist jedoch ein Lösungsansatz bei der die Position des äusseren Turbinengehäuses gegenüber dem Lagergehäuse im wesentlichen stufenlos eingestellt werden kann.

US 6 287 091, welches Dokument den nächstliegenden Stand der Technik bildet, offenbart ein Turbinengehäuse, welches ein Lagergehäuse für die Lagerung einer drehbaren Welle, ein Gaseintrittsgehäuse, ein Zentrierring zum Zentrieren des Gaseintrittsgehäuse bezüglich der im Lagergehäuse gelagerten Welle umfasst, wobei der Zentrierring und das Gaseintrittsgehäuse ineinandergreifenden Zentriermittel in Form von Nuten und radial gleichgerichteten Zentriernocken zum Eingreifen in den Nuten umfassen.

### Kurze Darstellung der Erfindung

Der Erfindung liegt folglich die Aufgabe zugrunde, das Gehäuse einer Abgasturbine derart zu verbessern, dass die Abgasturbine durch verbesserte Zentrierung des Turbinengehäuses bezüglich der im Lagergehäuse gelagerten Welle einen höheren Wirkungsgrad aufweist, bei gleichzeitiger grösstmöglicher Flexibilität bezüglich der Positionierung der äusseren Turbinengehäuseteile zum Lagergehäuse.

Erfindungsgemäss wird diese Aufgabe mit dem kennzeichnenden Merkmal des Patentanspruchs 1 gelöst.

Die Vorteile der Erfindung sind darin zu sehen, dass durch die radial oder axial gleichgerichteten Zentrierungsnocken mit entsprechenden Nuten jeweils mindestens eine der Verbindungen zwischen dem Lagergehäuse und dem Zentrierungsring bzw. dem Zentrierungsring und dem Gaseintrittsgehäuse nicht formschlüssig ist wodurch eine beliebige Positionierung des Gaseintrittsgehäuses gegenüber dem Lagergehäuse ermöglicht wird.

Diese Art von Zentrierung eignet sich für alle gängigen Verbindungsarten zwischen Lagergehäuse und Gaseintrittsgehäuse, da erfindungsgemäss die Zentrierung durch Bauteile im Innern des Turbinengehäuses im Auflagebereichs des Gaseintrittsgehäuses auf dem Lagergehäuse erfolgt.

Weitere Vorteile ergeben sich aus den abhängigen Ansprüchen.

### Kurze Beschreibung der Zeichnungen

Im folgenden sind anhand der Figuren Ausführungsbeispiele des erfindungsgemässen Turbinengehäuses schematisch dargestellt und näher erläutert. In allen Figuren sind gleichwirkende Elemente mit gleichen Bezugszeichen versehen. Es zeigen:
- Fig. 1: eine schematische Ansicht eines erfindungsgemässen Turbinengehäuses mit einem Zentrierungsring gemäss einem ersten Ausführungsbeispiel,
- Fig. 2: eine Ansicht eines entlang II-II geführten Schnitts durch den Zentrierungsring nach Fig. 1,
- Fig. 3: eine vergrössert dargestellte Ansicht des Zentrierungsrings nach Fig. 2,
- Fig. 4: eine vergrössert dargestellte Ansicht des Zentrierungsrings gemäss einem zweiten Ausführungsbeispiel des erfindungsgemässen Turbinengehäuses,
- Fig. 5: eine vergrössert dargestellte Ansicht des ersten Ausführungsbeispiels des erfindungsgemässen Turbinengehäuses im vormontierten Zustand,
- Fig. 6 und 7: vergrössert dargestellte Ansichten des ersten Ausführungsbeispiels des erfindungsgemässen Turbinengehäuses im montierten Zustand, und
- Fig. 8: eine vergrössert dargestellte Ansicht des zweiten Ausführungsbeispiels des erfindungsgemässen Turbinengehäuses.

### Weg zur Ausführung der Erfindung

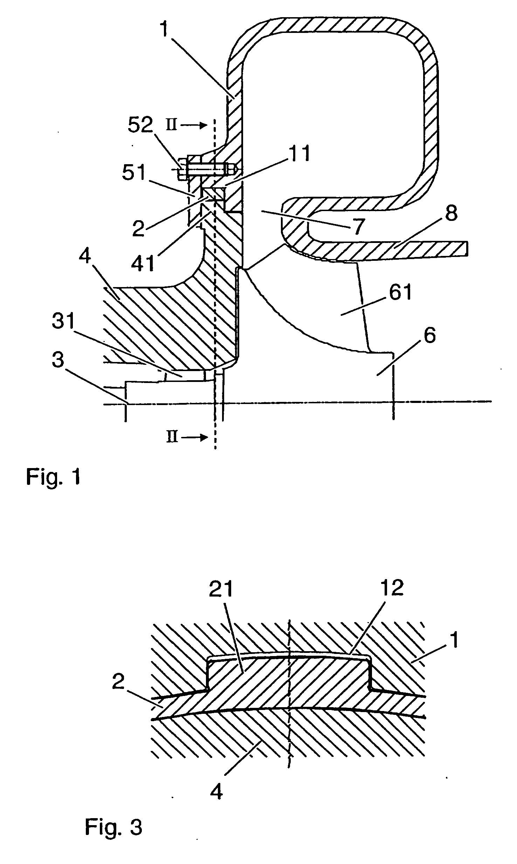

Der Abgasturbolader besteht hauptsächlich aus einer in Fig. 1 schematisch als Radialturbine dargestellten Abgasturbine und einem nicht dargestellten Verdichter. Die Abgasturbine umfasst hauptsächlich ein Gehäuse und ein darin drehbar angeordnetes Turbinenrad 5. Das Gehäuse umfasst ein radial aussenliegendes, spiralförmiges Gaseintrittsgehäuse 1, eine gasaustrittsseitige Gehäusewand 8 und ein Lagergehäuse 4. Das Turbinenrad 6 mit seinen Laufschaufeln 61 ist auf einer mittels Lagern 31 drehbar gelagerten Welle 3 angeordnet. Verdichterseitig ist auf der Welle ein ebenfalls nicht dargestelltes Verdichterrad angeordnet.

Das Gaseintrittsgehäuse geht stromab in einen Anströmkanal 7 für die Abgase einer mit dem Abgasturbolader verbundenen, ebenfalls nicht dargestellten Verbrennungsmaschine über. Der Anströmkanal ist durch die gasaustrittsseitige Gehäusewand 8 und durch das Gaseintrittsgehäuse 1 und Lagergehäuse 4 begrenzt.

Im Anströmkanal 7 kann zwischen Gaseintrittsgehäuse und Lagergehäuse und der gasaustrittsseitigen Gehäusewand ein Düsenring zur Strömungsumlenkung angeordnet sein.

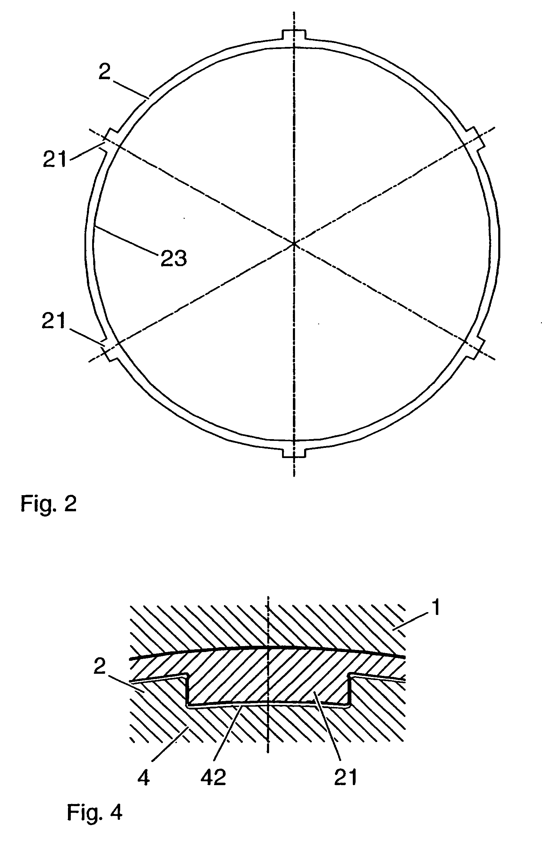

Das Gaseintrittsgehäuse 1 ist in der dargestellten Ausführungsform mit Laschen 51 am Lagergehäuse 4 befestigt, wobei die mit Schrauben 52 am Gasaustrittsgehäuse festgemachten Laschen gewisse Bewegungen des Gasaustrittsgehäuse 1 bezüglich des Lagergehäuses 4 in radialer Richtung erlauben. Im stehenden Zustand der Abgasturbine, wenn Gaseintrittsgehäuse und Lagergehäuse kalt sind, liegt das Gaseintrittsgehäuse mit der Auflage 11 auf der Auflage 41 des Lagergehäuses auf und ist dadurch entsprechend gegenüber der Welle 3 und dem darauf angeordneten Turbinenrad 6 zentriert. Im Auflagebereich ist radial zwischen den beiden Gehäuseteilen ein Zentrierungsring 2 angeordnet. Der Zentrierungsring weist, wie in Fig. 2 dargestellt, mehrere, beispielsweise 5 bis 7, Zentrierungsnocken 21 auf, welche in entsprechenden Zentrierungsnuten in einem der Gehäuseteile eingreifen. Die Zentrierungsnocken sind über den gesamten Umfang des Zentrierungsrings verteilt angeordnet und können radial nach innen, radial nach aussen oder axial ausgerichtet angeordnet sein.

Im ersten Ausführungsbeispiel sind die Zentrierungsnocken radial nach aussen gerichtet und die entsprechenden Nuten sind in das Gaseintrittsgehäuse 1 eingelassen. Fig. 3 zeigt einen vergrösserten Ausschnitt des Zentrierungsrings 2 mit einem Zentrierungsnocken 21 welcher in der Nut 12 des Gaseintrittsgehäuses eingreift. Der Zentrierungsring 2 ist im Betriebszustand der Abgasturbine mit dem Lagergehäuse 4 kraftschlüssig verbunden, indem er mit der den Nocken und Nuten abgewandten Seite auf dem radial innenliegenden Lagergehäuse 4 aufgepresst ist.

Im Betriebszustand der Abgasturbine erhitzt sich das Gaseintrittsgehäuse stärker als der Zentrierungsring und viel stärker als das Lagergehäuse. Die Pressung sorgt dafür, dass der Zentrierungsring sich nicht vom Lagergehäuse löst. Der Zentrierungsring bleibt demzufolge auch im Betriebszustand gegenüber dem Lagergehäuse zentriert. Das Gaseintrittsgehäuse, welches sich gegenüber dem Lagergehäuse sehr viel stärker erhitzt und daher den Zentrierungssitz auf dem Lagergehäuse durch hitzebedingte Ausdehnungen in radialer Richtung zu verlieren droht, verbleibt durch die radiale Führung der Zentrierungsnocken in den Nuten gegenüber dem Lagergehäuse zentriert.

Die Pressung kann dabei beispielsweise über einen Konus realisiert werden. Die den Zentrierungsnocken abgewandte Seite 23 des Zentrierungsrings und die gegenüberliegende Oberfläche des Lagergehäuses sind konusförmig angeschrägt. Der Konuswinkel, d.h. der Winkel der Oberfläche 23 zur Achse der Welle 3, wird vorteilhafterweise so gewählt, dass sich der Zentrierungsring beim Lösen der Gehäuseverbindung selbständig wieder von dem Lagergehäuse löst und der konische Pressverband somit keine Selbsthemmung hat. Dies ist bei einem Konuswinkel im Bereich von 15°-30° gegeben.

Die Pressung kann auch erreicht werden, indem nur eine der beiden gegenüberliegenden Seiten, also entweder die den Zentrierungsnocken abgewandte Seite des Zentrierungsrings oder die gegenüberliegende Oberfläche des Lagergehäuses, konusförmig angeschrägt ist, während die andere Seite zylindrisch geformt ist.

Fig. 4 zeigt einen entsprechend vergrösserten Ausschnitt des zweiten Ausführungsbeispiels, bei welchem die Zentrierungsnocken 21 radial nach innen gerichtet und die entsprechenden Nuten 42 in das Lagergehäuse 4 eingelassen sind. Der Zentrierungsring 2 ist mit der radial aussenliegenden, den Nocken und Nuten abgewandten Seite in das Gaseintrittsgehäuse 1 eingepresst.

Die weiteren Figuren zeigen vergrössert wie der Zentrierungsring zwischen Gaseintrittsgehäuse und Lagergehäuse eingepasst wird.

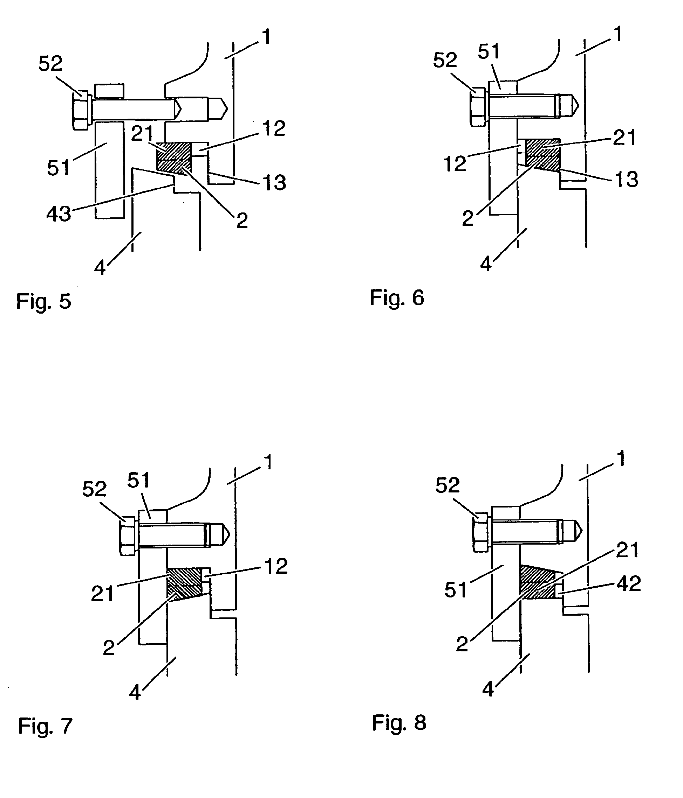

Fig. 5 bis 7 zeigen das erste Ausführungsbeispiel mit in dem Gaseintrittsgehäuse 1 eingelassenen Nuten 12 und radial nach aussen gerichteten Zentrierungsnocken 21. Beim Montieren des Gaseintrittsgehäuses 1 auf dem Lagergehäuse 4 wird gemäss Fig. 5 der Zentrierungsring 2 in axialer Richtung zwischen den Gehäuseteilen eingelegt. Dabei sind die radial aussenliegenden Zentrierungsnocken 21 auf die Nuten 12 in dem Gaseintrittsgehäuse auszurichten. Die Ausrichtung des Zentrierungsrings gegenüber dem Lagergehäuse kann beliebig gewählt werden, wodurch sich auch eine entsprechend freie Positionierung des Gaseintrittsgehäuses gegenüber dem Lagergehäuse ergibt. Anschliessend werden die beiden Gehäuseteile mittels Lasche 51 und Schraube 52 in axialer Richtung aneinandergeschoben, bis entsprechende Axialanschläge 43 und 13 einander berühren. Dabei wird der Zentrierungsring 2 auf das Lagergehäuse 4 aufgeschoben und angepresst. Dank dem konusförmigen Profil ergibt sich ein einfach zu realisierender radialer Presssitz.

Fig. 7 zeigt eine leicht abgeänderte Variante des ersten Ausführungsbeispiels, bei welcher der Konus axial in die andere Richtung zeigt. Entsprechend wird der Zentrierungsring 2 beim Montieren nicht axial zwischen den beiden Gehäuseteilen eingelegt, sondern von der Verdichterseite her eingeschoben. Der Zentrierungsring 2 wird beim Festschrauben der beiden Gehäuseteile durch die Laschen 51 auf den Konus des Lagergehäuses geschoben und darauf festgepresst.

Fig. 8 zeigt das zweite Ausführungsbeispiel mit in dem Lagergehäuse 4 eingelassenen Nuten 42 und radial nach innen gerichteten Zentrierungsnocken 21. Beim Montieren des Gaseintrittsgehäuses 1 auf dem Lagergehäuse 4 wird der Zentrierungsring 2 wiederum in axialer Richtung zwischen den Gehäuseteilen eingelegt. Dabei sind die radial innenliegenden Zentrierungsnocken 21 auf die Nuten 42 in dem Lagergehäuse auszurichten. Die Ausrichtung des Zentrierungsrings gegenüber dem Gaseintrittsgehäuse kann beliebig gewählt werden, wodurch sich auch eine entsprechend freie Positionierung des Gaseintrittsgehäuses gegenüber dem Lagergehäuse ergibt. Anschliessend werden die beiden Gehäuseteile mittels Lasche 51 und Schraube 52 in axialer Richtung aneinandergeschoben, bis die entsprechenden Axialanschläge 43 und 13 einander berühren. Dabei wird der Zentrierungsring 2 in das Gaseintrittsgehäuse 1 eingeschoben und eingepresst. Dank dem konusförmigen Profil ergibt sich ein einfach zu realisierender radialer Presssitz. Bei der dargestellten zweiten Ausführungsform des erfindungsgemässen Turbinengehäuses wird vorteilhafterweise ein sich stark erhitzender Zentrierungsring verwendet. Der erhitzte Zentrierungsring dehnt sich zusammen mit dem ebenfalls heissen Gaseintrittsgehäuse aus und bleibt dank der Pressung gegenüber dem Gaseintrittsgehäuse zentriert. Durch die radiale Führung der Zentrierungsnocken in den Nuten des Lagergehäuses verbleibt der Zentrierungsring und das Gaseintrittsgehäuse gegenüber dem Lagergehäuse zentriert.

Trotz der formschlüssigen Verbindung zwischen Zentrierungsring und dem mit den Nuten versehenen Gehäuseteil lässt sich die Position des Gaseintrittsgehäuses gegenüber dem Lagergehäuse stufenlos einstellen, da zwischen dem Zentrierungsring und dem anderen Gehäuseteil lediglich eine kraftschlüssige Pressverbindung aber keine formschlüssige Verbindung vorhanden ist.

Der Zentrierungsring kann anstelle von Zentrierungsnocken auch entsprechende Nuten aufweisen. Die Nocken sind dann im Lager- bzw. im Gaseintrittsgehäuse angeordnet.

Anstelle eines einteiligen Zentrierungsrings können auch mehrere, beispielsweise drei, Zentrierungsringsegmente zu einem Zentrierungsring zusammengefügt sein. Die Zentrierungsringsegmente sind an den Enden in radialer oder axialer Richtung miteinander verhakt. Der insbesondere für grössere Turbinen geeignete, in mehrere Segmente unterteilte Zentrierungsring lässt sich kostengünstiger herstellen und ist einfacher zu montieren.

### Bezugszeichenliste

- 1: Gaseintrittsgehäuse
- 11: Auflage
- 12: Zentrierungsnuten
- 13: Axialanschlag
- 2: Zentrierungsring
- 21: Zentrierungsnocken
- 23: Anpress-Oberfläche
- 3: Welle
- 31: Innenlager
- 4: Lagergehäuse
- 41: Auflage
- 42: Zentrierungsnuten
- 43: Axialanschlag
- 51: Lasche
- 52: Befestigungsmittel
- 6: Turbinenrad
- 61: Schaufeln
- 7: Anströmkanal
- 8: Gasaustrittsseitige Gehäusewand

## Patentansprüche

1. Turbinengehäuse, umfassend ein Lagergehäuse (4) für die Lagerung einer drehbaren Welle (3), ein auf dem Lagergehäuse aufliegendes, das Lagergehäuse im Auflagebereich konzentrisch umgebendes Gaseintrittsgehäuse (1), sowie ein Zentrierungsring (2) zum Zentrieren des Gaseintrittsgehäuses bezüglich der im Lagergehäuse gelagerten Welle, wobei der Zentrierungsring und entweder das Lagergehäuse oder das Gaseintrittsgehäuse ineinandergreifende Zentrierungsmittel (12, 21, 42) umfassen, **dadurch gekennzeichnet, dass**
die Zentrierungsmittel Nuten (12, 42) und entweder radial oder axial gleichgerichtete Zentrierungsnocken (21) zum Eingreifen in den Nuten umfassen, und dass zwischen dem Zentrierungsring (2) und dem nicht die Zentrierungsmittel umfassenden Gehäuse, also entweder dem Gaseintrittsgehäuse (1) oder dem Lagergehäuse (4), eine kraftschlüssige Verbindung besteht.

2. Turbinengehäuse nach Anspruch 1, **dadurch gekennzeichnet, dass** die Zentrierungsnocken (21) auf dem Zentrierungsring angeordnet und die Nuten (42, 12) entweder in das Lagergehäuse (4) oder das Gaseintrittsgehäuse (1) eingelassen sind.

3. Turbinengehäuse nach Anspruch 1, **dadurch gekennzeichnet, dass** die Nuten in den Zentrierungsring eingelassen und die Zentrierungsnocken entweder an dem Lagergehäuse oder dem Gaseintrittsgehäuse angeordnet sind.

4. Turbinengehäuse nach einem der Ansprüche 1 bis 3, **dadurch gekennzeichnet, dass** der Zentrierungsring (2) mit der den Zentrierungsmitteln abgewandten Seite (23) auf dem Lagergehäuse (4) bzw. dem Gaseintrittsgehäuse (1) aufgepresst ist.

5. Turbinengehäuse nach Anspruch 4, **dadurch gekennzeichnet, dass** die den Zentrierungsmitteln abgewandte Seite (23) des Zentrierungsrings und/ oder die Gehäuseoberfläche (11, 41) auf die der Zentrierungsring aufgepresst ist, ein konisches Profil aufweisen.

6. Turbinengehäuse nach Anspruch 4, **dadurch gekennzeichnet, dass** der Konuswinkel mit 15°-30° derart gewählt ist, dass der Pressverbund zwischen Zentrierungsring (2) und Gehäuseoberfläche (11,41) nicht selbsthemmend ist.

## Claims

1. Turbine casing, comprising a bearing casing (4) for the bearing arrangement of a rotatable shaft (3), a gas-inlet casing (1) supported on the bearing casing and concentrically surrounding the bearing casing in the supporting region, and a centering ring (2) for centering the gas-inlet casing relative to the shaft mounted in the bearing casing, the centering ring and either the bearing casing or the gas-inlet casing comprising intermeshing centering means (12, 21, 42), **characterized in that** the centering means comprise grooves (12, 42) and either radially or axially unidirectional centering lugs (21) for engaging in the grooves, and **in that** there is a frictional connection between the centering ring (2) and the casing which does not comprise the centering means, that is to say either the gas-inlet casing (1) or the bearing casing (4).

2. Turbine casing according to Claim 1, **characterized in that** the centering lugs (21) are arranged on the centering ring and the grooves (42, 12) are incorporated in either the bearing casing (4) or the gas-inlet casing (1).

3. Turbine casing according to Claim 1, **characterized in that** the grooves are incorporated in the centering ring and the centering lugs are arranged on either the bearing casing or the gas-inlet casing.

4. Turbine casing according to one of Claims 1 to 3, **characterized in that** the centering ring (2) is pressed in place on the bearing casing (4) or the gas-inlet casing (1) with the side (23) remote from the centering means.

5. Turbine casing according to Claim 4, **characterized in that that** side (23) of the centering ring which is remote from the centering means and/or the casing surface (11, 41) onto which the centering ring is pressed have/has a conical profile.

6. Turbine casing according to Claim 4, **characterized in that** the cone angle, at 15°-30°, is selected in such a way that the press fit between centering ring (2) and casing surface (11, 41) is not self-locking.

## Revendications

1. Carter de turbine, comprenant un logement de palier (4) pour supporter un arbre rotatif (3), un carter d'entrée de gaz (1) reposant sur le logement de palier, entourant concentriquement le logement de palier dans la région d'appui, ainsi qu'une bague de centrage (2) pour centrer le carter d'entrée de gaz par rapport à l'arbre monté dans le logement de palier, la bague de centrage et soit le logement de palier soit le carter d'entrée de gaz comprenant des moyens de centrage (12, 21, 42) en prise les uns dans les autres, **caractérisé en ce que** les moyens de centrage comprennent des rainures (12, 42) et des cames de centrage (21) orientées dans le même sens soit radialement soit axialement, pour venir en prise dans les rainures, et **en ce qu'**entre la bague de centrage (2) et le carter n'entourant pas les moyens de centrage, c'est-à-dire soit le carter d'entrée de gaz (1) soit le logement de palier (4), il existe une connexion par engagement par force.

2. Carter de turbine selon la revendication 1,
**caractérisé en ce que** les cames de centrage (21) sont disposées sur la bague de centrage et les rainures (42, 12) sont pratiquées soit dans le logement de palier (4) soit dans le carter d'entrée de gaz (1).

3. Carter de turbine selon la revendication 1,
**caractérisé en ce que** les rainures sont pratiquées dans la bague de centrage et les cames de centrage sont disposées soit sur le logement de palier soit sur le carter d'entrée de gaz.

4. Carter de turbine selon l'une quelconque des revendications 1 à 3, **caractérisé en ce que** la bague de centrage (2) est pressée avec le côté (23) opposé aux moyens de centrage sur le logement de palier (4) ou sur le carter d'entrée de gaz (1).

5. Carter de turbine selon la revendication 4,
**caractérisé en ce que** le côté (23) opposé aux moyens de centrage de la bague de centrage et/ou la surface de carter (11, 41) sur laquelle est pressée la bague de centrage, présentent un profil conique.

6. Carter de turbine selon la revendication 4,
**caractérisé en ce que** l'angle de conicité est choisi de l'ordre de 15 à 30 °, de telle sorte que l'assemblage par pressage entre la bague de centrage (2) et la surface de carter (11, 41) ne soit pas autobloquant.
